# EUROPÄISCHE PATENTSCHRIFT

(11) **EP 0 962 356 B1**
(45) Veröffentlichungstag und Bekanntmachung des Hinweises auf die Patenterteilung: **01.10.2008**
(21) Anmeldenummer: 99109047.3
(22) Anmeldetag: 07.05.1999
(51) Int. Cl.: B60N 2/08

(54) **Längsführung eines Fahrzeugsitzes mit Arretiervorrichtung**
Vehicle seat slide with locking device
Glissière de siège de véhicule à dispositif de verrouillage

(30) Priorität: 05.06.1998 DE 19825099
(43) Veröffentlichungstag der Anmeldung: 08.12.1999
(73) Patentinhaber: C.Rob. Hammerstein GmbH & Co.KG, 42699 Solingen (DE)
(72) Erfinder: Becker, Burckhard, 42655 Solingen (DE); Frohnhaus, Ernst-Reiner, 42653 Solingen (DE)
(74) Vertreter: Bauer, Wulf

(56) Entgegenhaltungen:
- WO-A-96/11123
- WO-A-98/25784
- DE-A- 4 400 232
- DE-A- 4 432 861
- DE-C- 4 242 895
- DE-U- 29 700 866

## Beschreibung

Die Erfindung bezieht sich auf eine Längsführung eines Fahrzeugsitzes.

Aus der DE 42 42 895 C1 oder der DE 297 00 866 U1 ist eine Längsführung eines Fahrzeugsitzes vorbekannt, die zum einen eine Oberschiene und eine Unterschiene aufweist und die zum anderen eine Arretiervorrichtung hat, welche
a) ein Lagergehäuse aufweist,
b) mehrere, im Lagergehäuse angeordnete, unabhängig voneinander in eine Sperrposition einrastbare und gemeinsam in eine Freigabeposition ausrastbare Sperrfinger hat,
c) eine Entriegelungsklappe aufweist, die
   - um eine Schwenkachse und dabei zwischen einer Sperrstellung und einer Freigabestellung schwenkbar am Lagergehäuse angeordnet ist,
   - einen Entriegelungsbereich hat und
   - für jeden Sperrfingern einen Mitnehmer für die formschlüssige Mitnahme des jeweiligen Sperrfingers in die Freigabeposition hat und .
d) für jeden Sperrfinger eine Sperrfeder hat, die sich jeweils am zugehörigen Sperrfinger abstützt.

Aus der nicht vorveröffentlichten WO98/25784 A1, die Stand der Technik gemäß Art. 54 (3) EPÜ, jedoch nur für GB und DE ist, ist eine Längsführung eines Fahrzeugsitzes bekannt geworden, die zum einen eine Oberschiene und eine Unterschiene aufweist und die zum anderen eine Arretiervorrichtung hat, welche
a) ein Lagergehäuse aufweist,
b) mehrere, im Lagergehäuse angeordnete, unabhängig voneinander in eine Sperrposition einrastbare und gemeinsam in eine Freigabeposition ausrastbare Sperrfinger hat,
c) eine Entriegelungsklappe aufweist, die
   - um eine Schwenkachse und dabei zwischen einer Sperrstellung und einer Freigabestellung schwenkbar am Lagergehäuse angeordnet ist,
   - einen Entriegelungsbereich hat und
   - für jeden Sperrfinger einen Mitnehmer für die formschlüssige Mitnahme des jeweiligen Sperrfingers, in die Freigabeposition hat und
d) für jeden Sperrfinger eine Sperrfeder hat, die sich jeweils am zugehörigen Sperrfinger abstützt und die Sperrfeder jeweils zwischen der Entriegelungsklappe und dem zugehörigen Sperrfinger angeordnet ist, und eine Hauptfeder vorgesehen ist, die zwischen Lagergehäuse und Entriegelungsklappe angeordnet ist und die Entriegelungsklappe gegen die Wirkung der einzelnen Sperrfedern in die Sperrstellung vorbelastet.

Bei derartigen Längsführungen greifen die mehreren Sperrzähne niemals alle gemeinsam in Rastöffnungen ein, vielmehr liegt in den meisten Sperrzuständen mindestens ein Sperrfinger auf einer Raste auf. Die Sperrfinger greifen auch nicht alle in vollständiger Tiefe in die Rastöffnungen ein, vielmehr greift typischerweise mindestens ein Sperrzahn nur teilweise in eine Rastöffnung ein, er liegt dabei zumeist mit einer schräg verlaufenden Flanke an der Kante der Rastöffnung an. Für die Arretierung werden nur zwei Sperrfinger benötigt, von denen der eine die Arretierung in eine Verschieberichtung, der andere die Arretierung in die andere Verschieberichtung übernimmt. Die Arretiervorrichtung hat zumeist drei bis vier Sperrfinger.

Bei einer typischen Sperrstellung gibt es also im allgemeinen mindestens einen fehlgerasteten Sperrfinger, typischerweise mindestens einen Sperrfinger, der nur teilweise eingreift und schliesslich mindestens einen Sperrfinger, der vollständig eingerastet ist.

Derartige Arretiervorrichtungen eignen sich insbesondere für Längsführungen, sie sind aber auch einsetzbar für andere manuell betätigte Feststellvorrichtungen an einstellbaren Fahrzeugsitzen, beispielsweise zur Arretierung des Winkels eines Lehnengelenkbeschlages oder für die Höhenverstellung einer Sitzvorderkante.

Die Entriegelungsklappe ist als Schleppkupplung ausgebildet. Bei einem Entriegelungsvorgang wirkt sie zunächst mit dem mindestens einen, vollständig eingerasteten Sperrfinger zusammen und zieht diesen an. Bei Fortsetzung der Entriegelungsbewegung kommen ihre Mitnehmer in Kontakt mit dem mindesten einen, nur teilweise eingerasteten Sperrfinger, der ebenfalls angehoben wird. Schließlich nimmt die Entriegelungsklappe mit dem zugehörigen Mitnehmer bei Fortsetzung der Entriegelungsbewegung den mindestens einen Sperrfinger mit, der fehlgerastet ist. Ist auch dieser angehoben, sind alle vorhandenen Sperrfinger von der Entriegelungsklappe erfaßt. Die Anhebebewegung muß soweit durchgeführt werden, dass die Schienen frei gegeneinander verschoben werden können.

Bei der beschriebenen praktischen Betätigung spürt der Bediener eine abgestufte Bedienkraft. Zunächst muß über die Entriegelungsklappe nur der mindestens eine, vollständig eingerastete Sperrfinger angehoben werden, in Fortsetzung der Entriegelungsbewegung steigt die Bedienkraft an, wenn der mindestens eine teilweise eingerastete Sperrfinger angezogen wird, schließlich liegt die maximale Betätigungskraft vor, wenn alle Sperrfinger von der Entriegelungsklappe gezogen werden. Ein Benutzer spürt also während der Freigabebewegung der Sperrfinger eine stufig steigende Kraft, die bedingt ist von den Sperrfedern der einzelnen Sperrfinger.

Die eingangs genannte Offenlegungsschrift bietet bereits eine Lösung dafür, das für einen Benutzer möglichst kleine Kraftstufen bei der Lösebewegung auftreten. Es werden alternierend kurze und längere Rastöffnungen hintereinander in der Rastenschiene angeordnet.

Störend ist bei den vorbekannten Längsführungen die relativ große Bauhöhe der Arretiervorrichtung. Hiervon ausgehend hat sich die Erfindung die Aufgabe gestellt, eine Arretiervorrichtung für insbesondere eine Längsführung zu schaffen, die einerseits eine kleine Bauhöhe in Längsrichtung der Sperrfinger zuläßt und andererseits die Betätigungskraft beim Lösevorgang durch geeignete Maßnahmen so beeinflußt, dass die beschriebenen Kraftstufen, die während des Lösevorgangs anfallen, für den Benutzer möglichst wenig spürbar sind.

Ausgehend von der Längsführung der eingangs genannten Art wird diese Aufgabe gelöst durch die Merkmale des Anspruchs 1.

Aufgrund der Entriegelungsklappe ist eine sehr flache Bauhöhe der Arretiervorrichtung erreichbar. Diese wird bei geeigneter Ausbildung der Sperrfedern, beispielsweise als Blattfedern oder als Federstäbe, insbesondere Schenkelfedern, im wesentlichen nur durch den maximal benötigten Hub für die Sperrfingern bestimmt. Aufgrund der Entriegelungsklappe greifen die Sperrfedern von der Seite an, sie verlaufen also im wesentlichen quer zur Längsrichtung der Sperrfinger. Sie sind an der Entriegelungsklappe angeordnet und erstrecken sich damit im wesentlichen parallel zu einem Hauptbereich dieser Entriegelungsklappe. Damit ist ein erheblicher Teil der Mechanik seitlich der Sperrfinger angeordnet, was die geringe Bauhöhe ermöglicht.

Das Lagergehäuse lässt sich relativ einfach ausbilden. Es wird an einer der beiden Schienen, typischerweise der Oberschiene, befestigt. Das Lagergehäuse lagert die Entriegelungsklappe. Es ist in einer bevorzugten Ausführung der Erfindung weiterhin für die Führung der einzelnen Sperrfinger zuständig, die Führung der einzelnen Sperrfinger kann aber auch mehr oder weniger auf die zugehörige Schiene und dort vorgesehene Mittel übertragen werden. Der entsprechende Teilbereich der zugehörigen Schiene bildet dann im Sinne des Sprachgebrauchs der vorliegenden Beschreibung einen Bestandteil des Lagergehäuses.

In einer besonders bevorzugten Ausführung ist zwischen Lagergehäuse und Entriegelungsklappe eine Hauptfeder angeordnet, die die Entriegelungsklappe gegen die Wirkung der einzelnen Sperrfedern in die Sperrstellung vorbelastet. Mechanisch gesehen sind damit die Hauptfedem und die Gruppe der einzelnen Sperrfedern hintereinander geschaltet. Die Hauptfeder belastet die Entriegelungsklappe in die Sperrstellung. Die einzelnen Sperrfedern belasten die Entriegelungsklappe in Gegenrichtung. Die Federkraft der Hauptfeder ist so groß gewählt, das im Normalzustand, also ohne eine am Entriegelungsbereich angreifende Lösekraft, die Entriegelungsklappe sich in Sperrstellung befindet. In dieser liegt sie beispielsweise auf dem Unterteil des Lagergehäuses oder der Oberseite der zugehörigen Schiene, insbesondere der Oberschiene, unmittelbar auf.

Der Vorteil der mechanischen Reihenschaltung der Federn liegt in folgendem: Bei einem Lösevorgang arbeitet man anfangs gegen die Kraft von zumindest einer Sperrfeder. Wird die Lösebewegung fortgesetzt, kommen weitere Sperrfedern zur Wirkung. dabei werden die Sperrfedern zunehmend entspannt. Sie machen sich im Lösevorgang dann zunehmend nicht mehr bemerkbar. Wenn alle Sperrfinger freigezogen sind, also am Mitnehmer anliegen, macht sich keine Sperrfeder mehr in der Lösekraft bemerkbar. In dem Maße, in dem also im Laufe eines Entriegelungsvorgangs mehr und mehr Sperrfinger freigezogen werden, verringern sich auch die spürbaren Federkräfte der einzelnen Sperrfedern. Insgesamt wird also eine günstige kompensation erreicht, die es ermöglicht, die Probleme einer stufig anfallenden Lösekraft zu beheben.

In einer weiteren, bevorzugten Ausführung ist die Wirklinie der Hauptfeder in der Sperrstellung der Entriegelungsklappe weiter entfernt von der Schwenkachse als in Freigabestellung der Entriegelungsklappe. Dadurch verringert sich die Federkraft während der Entriegelungsbewegung progressiv. In dem Maße, in dem sich während eines Lösevorgangs die einzelnen Sperrfedern immer weniger bemerkbar machen, sinkt auch die gegenwirkende Rückstellkraft der Hauptfeder.

In einer besonders bevorzugten Ausführung sind die Sperrfedern als Blattfeder oder als Federstäbe, dabei insbesondere als Schenkelfedern, ausgebildet. Dies ermöglicht eine besonders geringe Bauhöhe, weiterhin auch eine Zusammenfassung der einzelnen Federn zu Kombinationsfedern. Unter Kombinationsfedern ist eine Zusammenfassung einzelner, insbesondere aller Sperrfedern zu verstehen. Kombinationsfedern erleichtern die Montage, weil nicht beispielsweise drei oder vier einzelne Sperrfedern eingesetzt werden müssen, sondern nur eine Kombinationsfeder montiert werden muß. Die Hauptfeder selbst kann beliebig ausgebildet sein, sie ist beispielsweise eine Schraubenzugfeder, sie kann aber auch als Druckfeder, als Torsionsstab, als Schenkelfeder usw. ausgeführt sein.

In einer bevorzugten Ausführung stützen sich die Sperrfedern an der Schwenkachse ab. Dadurch ist eine eindeutige Zuordnung gegeben und eine einfache Montage möglich.

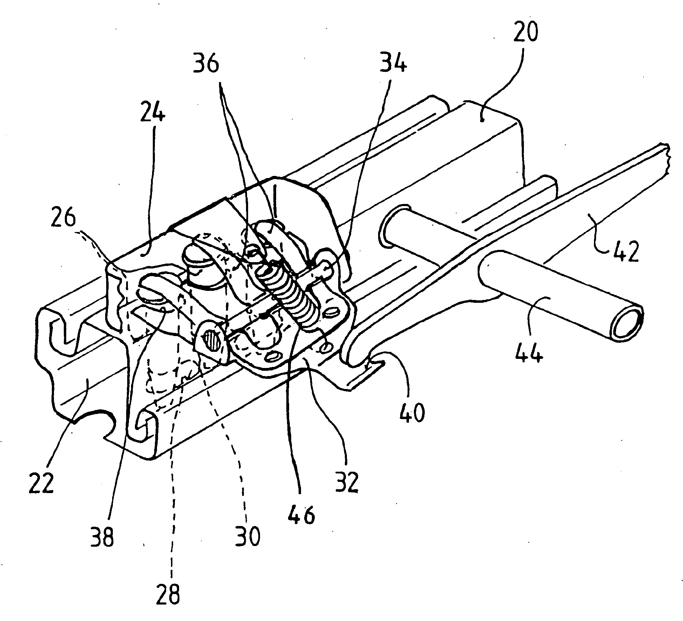

Weitere Vorzüge und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die einzige Figur im folgenden näher erläutert wird. Diese einzige Figur zeigt eine perspektivische, teilweise schnittbildlich ausgeführte Darstellung einer Längsführung mit einer Unterschiene und einer Oberschiene sowie einer Arretiervorrichtung.

Die Längsführung hat in bekannter Weise eine Oberschiene 20 und eine Unterschiene 22, die über hier nicht dargestellte Gleitmittel, wie beispielsweise Kugeln, verschiebbar gegeneinander geführt sind. Sie haben weiterhin in bekannter Weise Verhakungsbereiche, die ein Trennen der Schienen voneinander, wie es beispielsweise bei unfallbedingt angreifenden Verzögerungskräften auftritt, behindern.

Auf der Oberschiene 20 ist ein Lagergehäuse 24 einer Arretiervorrichtung angeordnet. Sie hat im hier gezeigten Ausführungsbeispiel drei unabhängig voneinander bewegbare, baugleiche Sperrfinger 26. Sie sind in Längsrichtung der Schienen 20, 22 hintereinander angeordnet und haben gleichen Abstand. Sie ragen durch Führungslöcher in der Oberschiene 20 hindurch und greifen in eine Rastenleiste ein, die von der Basis der Unterschiene 22 gebildet wird. Dort sind in Längsrichtung der Schienen 20, 22 hintereinander Rastöffnungen 28 und Rasten 30 angeordnet.

Die Zahl der Sperrfinger 26 ist grundsätzlich beliebig, sie kann auch größer als drei sein. Typischerweise liegt sie bei drei oder vier. Die Führung der Sperrfinger 26 ist in der Figur nur angedeutet, es können im Lagergehäuse 24 selbst, einschließlich des diesem zugeordneten Teilbereichs der Oberschiene 20, Führungen für die Sperrfinger 26 vorgesehen sein, beispielsweise in Form von Zylinderbuchsen. Dabei ist ein möglichst kurzer Abstand zu den Rastöffnungen 28 und Rasten 30 erwünscht, damit möglichst kleine Kippmomente auftreten. Es ist aber auch möglich, größere Abstände zu den Rastöffnungen 28 und 30 vorzusehen, wenn man bewußt ein Verbiegen der Sperrfinger 26 unter unfallbedingter Belastung erreichen möchte.

Am Lagergehäuse 24 ist eine Entriegelungsklappe 32 schwenkbar angeordnet. Hierfür ist eine Schwenkachse 34 vorgesehen, die parallel zur Längsrichtung der Schienen 20, 22 verläuft. Weiterhin befindet sie sich neben den oberen Endbereichen der Sperrfinger 26 und in einem gewissen Abstand sowie auf gleicher Höhe davon.

Jedem der drei Sperrfinger 26 ist eine Sperrfeder 36 zugeordnet. Sie ist im Ausführungsbeispiel als Blattfeder ausgebildet. Jede einzelne Blattfeder erstreckt sich im wesentlichen parallel zur Entriegelungsklappe 32. Die drei einzelnen Blattfedern sind zu einer Vielfachfeder zusammengefaßt, die im wesentlichen die Form eines E hat. Die einzelnen Blattfedern springen dabei von einem Querbereich vor, der an der Entriegelungsklappe 32 mittels zweier Nieten festgelegt ist. Die einzelnen Blattfedern stützen sich an der Schwenkachse 54 ab, hierzu haben sie eine im wesentlichen halbkreisförmige Biegung. Die Sperrfedern 36 liegen mit ihren freien Enden auf dem oberen Endbereich der Sperrfinger 26 auf. Dieser obere Endbereich ist verdickt, darunter befindet sich für jeden Sperrfinger 26 ein Mitnehmer 38. Er hat die Form einer Bucht, die den im wesentlichen zylindrischen Mittelteil des zugehörigen Sperrfingers 26 aufnimmt. Darunter verjüngt sich der Sperrfinger im eigentlichen Sperrbereich, er ist dort kegelstumpfförmig. Die Weite der Mitnehmer 38 ist so gewählt, dass sie geringer ist als die beschriebene Verdickung. Dadurch stößt beim Hochheben der Entriegelungsklappe 32 der jeweilige Mitnehmer 38 an der Verdickung an und zieht den zugehörigen Sperrfinger 26 mechanisch nach oben.

Jenseits der Mitnehmen 38 und in Nähe des Querbereichs der Vielfachfeder ist ein leicht muldenförmig ausgebildeter Entriegelungsbereich 40 vorgesehen. Er kommt in Kontakt mit einem doppelarmigen Lösehebel 42, der um eine Achse 44 schwenkbar an der Oberschiene 20 angelenkt ist.

Zwischen dem Entriegelungsbereich 40 und dem Querbereich der Vielfachfeder ist ein Loch vorgesehen, in das ein Endbereich einer Hauptfeder 46 greift. Ihr anderer Endbereich ist an einer Lasche angelenkt, die oberhalb der Sperrfedern vorspringt und im wesentlichen senkrecht oberhalb der Schwenkachse 34 endet, dort ist ein Loch vorgesehen für das Einhaken des anderen Endbereichs der als Schraubenzugfeder ausgebildeten Hauptfeder 46. Beim Freischwenken der Entriegelungsklappe 32 aus der dargestellten Sperrstellung in die Freigabestellung schwenkt der Entriegelungsbereich nach unten, dadurch kommt die Hauptfeder 46 der Schwenkachse 34 näher.

Der Lösehebel 42 hat eine hier nicht dargestellte, federbelastete Ruhestellung, in der er vom Entriegelungsbereich 40 frei ist, so dass die Entriegelungsklappe 32 unter der Wirkung der Hauptfeder 46 selbsttätig die Sperrstellung einnehmen kann, ohne hierbei vom Lösehebel 42 gehindert zu sein. Nur bei aktiver Betätigung des Lösehebels 42 wird die Entriegelungsklappe 32 in die Freigabestellung geschwenkt

Die Federkraft der Hauptfeder 46 ist bei einer Ausführung mit drei Sperrfingern 26, wie dargestellt, so gewählt, dass sie mindestens 1,5 mal größer ist als die Federkraft einer einzelnen Sperrfeder.

Es ist möglich, die Hauptfeder 46 direkt an den Sperrfedern 36 angreifen zu lassen, beispielsweise am Querbereich der Vielfachfeder.

## Patentansprüche (Patentansprüche für folgende(n) Vertragsstaat(en): DE, GB)

1. Längsführung eines Fahrzeugsitzes, die zum einen eine Oberschiene (20) und eine Unterschiene (22) aufweist und die zum anderen eine Arretiervorrichtung hat, welche
a) ein Lagergehäuse (24) aufweist,
b) mehrere, im Lagergehäuse (24) angeordnete, unabhängig voneinander in eine Sperrposition einrastbare und gemeinsam in eine Freigabeposition ausrastbare Sperrfinger (26) hat,
c) eine Entriegelungsklappe (32) aufweist, die
- um eine Schwenkachse (34) und dabei zwischen einer Sperrstellung und einer Freigabestellung schwenkbar am Lagergehäuse (24) angeordnet ist,
- einen Entriegelungsbereich (40) hat und
- für jeden Sperrfinger (26) einen Mitnehmer (38) für die formschlüssige Mitnahme des jeweiligen Sperrfingers (26) in die Freigabeposition hat und
d) für jeden Sperrfinger (26) eine Sperrfeder (36) hat, die sich jeweils am zugehörigen Sperrfinger (26) abstützt und die Sperrfeder (36) wirkungsmäßig jeweils zwischen der Entriegelungsklappe (32) und dem zugehörigen Sperrfinger (26) angeordnet ist, und eine Hauptfeder (46) vorgesehen ist, die zwischen Lagergehäuse (24) und Entriegelungsklappe (32) angeordnet ist und die Entriegelungsklappe (32) gegen die Wirkung der einzelnen Sperrfedern (36) in die Sperrstellung vorbelastet, wobei die Federkraft der Hauptfeder (46) bei drei Sperrfingern (26) mindestens 1,5 mal größer ist als die Federkraft einer einzelnen Sperrfeder (36) und bei vier Sperrfingern (26) 2,5 mal grösser ist als die Federkraft einer Sperrfeder (36).

2. Längsführung nach Anspruch 1, **dadurch gekennzeichnet, dass** die Wirklinie der Hauptfeder (46) in der Sperrstellung der Entriegelungsklappe (32) weiter entfernt von der Schwenkachse (34) ist als in der Freigabestellung der Entriegelungsklappe (32).

3. Längsführung nach Anspruch 1, **dadurch gekennzeichnet, dass** die Sperrfedern (36) jeweils als Blattfedern oder als Federstäbe, insbesondere Schenkelfedern, ausgebildet sind.

4. Längsführung nach Anspruch 1, **dadurch gekennzeichnet, dass** die Sperrfedern (36) sich an der Schwenkachse (34) abstützen, insbesondere an ihr gehalten sind.

5. Längsführung nach Anspruch 1, **dadurch gekennzeichnet, dass** die Sperrfedern (36) in Nähe eines Endbereichs der jeweils zugehörenden Sperrfinger (26) angreifen, insbesondere auf dem Endbereich aufliegen.

6. Längsführung nach Anspruch 1, **dadurch gekennzeichnet, dass** die einzelnen Sperrfedern (36) zu einer einstückigen Vielfachfeder zusammengefast sind, die insbesondere einen Querbereich hat, der sich an der Entriegelungsklappe (32) abstützt.

7. Längsführung nach Anspruch 1, **dadurch gekennzeichnet, dass** die Sperrfedern (36) im wesentlichen quer zur Bewegungsrichtung der Sperrfinger (26) verlaufen.

8. Längsführung nach Anspruch 1, **dadurch gekennzeichnet, dass** die Hauptfeder (46) an den Sperrfedern (36) angreift, und zwar im Bereich der Sperrfedern (36), der der Entriegelungsklappe (32) zugeordnet ist.

## Patentansprüche (Patentansprüche für folgende(n) Vertragsstaat(en): FR)

1. Längsführung eines Fahrzeugsitzes, die zum einen eine Oberschiene (20) und eine Unterschiene (22) aufweist und die zum anderen eine Arretiervorrichtung hat, welche
a) ein Lagergehäuse (24) aufweist,
b) mehrere, im Lagergehäuse (24) angeordnete, unabhängig voneinander in eine Sperrposition einrastbare und gemeinsam in eine Freigabeposition ausrastbare Sperrfinger (26) hat,
c) eine Entriegelungsklappe (32) aufweist, die
- um eine Schwenkachse (34) und dabei zwischen einer Sperrstellung und einer Freigabestellung schwenkbar am Lagergehäuse (24) angeordnet ist,
- einen Entriegelungsbereich (40) hat und
- für jeden Sperrfinger (26) einen Mitnehmer 38) für die formschlüssige Mitnahme des jeweiligen Sperrfingers (26) in die Freigabeposition hat und
d) für jeden Sperrfinger (26) eine Sperrfeder (36) hat, die wirkungsmäßig jeweils zwischen der Entriegelungsklappe (32) und dem zugehörigen Sperrfinger (26) angeordnet ist.

2. Längsführung nach Anspruch 1 **dadurch gekennzeichnet** durch eine zwischen Lagergehäuse (24) und Entriegelungsklappe (32) angeordnete Hauptfeder (46), die die Entriegelungsklappe (32) gegen die Wirkung der einzelnen Sperrfedern (36) in die Sperrstellung vorbelastet.

3. Längsführung nach Anspruch 2, **dadurch gekennzeichnet, dass** die Wirklinie der Hauptfeder (46) In der Sperrstellung der Entriegelungsklappe (32) weiter entfernt von der Schwenkachse (34) ist als in der Freigabestellung der Entriegelungsklappe (32).

4. Längsführung nach Anspruch 1, **dadurch gekennzeichnet, dass** die Federkraft der Hauptfeder (46) bei drei Sperrfingern (26) mindestens 1,5 mal größer ist als die Federkraft einer einzelnen Sperrfeder (36) und bei vier Sperrfingern (26) 2,5 mal größer ist als die Federkraft einer Sperrfeder (36).

5. Längsführung nach Anspruch 1, **dadurch gekennzeichnet, dass** die Sperrfedern (36) jeweils als Blattfedern oder als Federstäbe, insbesondere Schenkelfedern, ausgebildet sind.

6. Längsführung nach Anspruch 1, **dadurch gekennzeichnet, dass** die Sperrfedern (36) sich an der Schwenkachse (34) abstützen, insbesondere an ihr gehalten sind.

7. Längsführung nach Anspruch 1, **dadurch gekennzeichnet, dass** die Sperrfedern (36) In Nähe eines Endbereichs der Jeweils zugehörenden Sperrfinger (26) angreifen, insbesondere auf dem Endbereich aufliegen.

8. Längsführung nach Anspruch 1, **dadurch gekennzeichnet, dass** die einzelnen Sperrfedern (36) zu einer einstückigen Vielfachfeder zusammengefaßt sind, die insbesondere einen Querbereich hat, der sich an der Entriegelungsklappe (32) abstützt.

9. Längsführung nach Anspruch 1, **dadurch gekennzeichnet, dass** die Sperrfedern (36) im wesentlichen quer zur Bewegungsrichtung der Sperrfinger (26) verlaufen.

10. Längsführung nach Anspruch 1, **dadurch gekennzeichnet, dass** die Hauptfeder (46) an den Sperrfedern (36) angreift, und zwar im Bereich der Sperrfedern (36), der der Entriegelungsklappe (32) zugeordnet ist.

## Claims (Claims for the following Contracting State(s): FR)

1. In a longitudinal guide rail of a motor vehicle seat, which has a top rail (20) and a bottom rail (22) and a device for locking which comprises
a) a bearing casing (24),
b) a number of blocking fingers (26) arranged in the bearing casing (24), which can, independently from each other, engage into a blocking position and which can be jointly released,
c) an unlocking hatch (32) which
- is arranged around a swiveling axis (34) and can be moved between said blocking position and a release position in a swiveling manner at the bearing casing (24),
- comprises an unlocking area (40) and
- comprises for each blocking finger (26) a carrier (38) for a form-locking movement of the respective blocking finger (26) into the release position, and
d) a retaining spring (36) for each blocking finger (26) which each is operatively arranged between the unlocking hatch (32) and the associated blocking finger (26).

2. The longitudinal guide rail according to claim 1, **characterized in that** a master spring (46) is arranged between the bearing casing (24) and the unlocking hatch (32), which biases the unlocking hatch (32) into the blocking position against the effect of the individual retaining springs (36)

3. The longitudinal guide rail according to claim 1, **characterized in that** an effective line of the master spring (46) is further away from the swiveling axis (34) in the topmost indexing position of the unlocking hatch (32) than in the release position of the unlocking hatch (32).

4. The longitudinal guide rail according to claim 1, **characterized in that** the spring tension of the master spring (46) is, in the case of 3 blocking fingers (26), at least 1,5 times larger than the spring tension of an individual retaining spring (36) and in the case of four blocking fingers (26) 2,5 times larger than the spring tension of a retaining spring (36).

5. The longitudinal guide rail according to claim 1, **characterized in that** the retaining springs (36) are each embodied as leaf type springs or as spring bars, especially as operating lever springs.

6. The longitudinal guide rail according to claim 1, **characterized in that** the retaining springs (36) support themselves on the swiveling axis (34), especially that they are held by it.

7. The longitudinal guide rails according to claim 1, **characterized in that** the retaining springs (36) engage with the associated blocking finger (26) near a terminal area, especially rest on the terminal area.

8. The longitudinal guide rail according to claim 1, **characterized in that** the individual retaining springs (36) are combined to a one piece multiple spring, which has a transverse area, which transverse area supports itself on the unlocking hatch (32).

9. The longitudinal guide rail according to claim 1, **characterized in that** the retaining springs (36) essentially run crosswise to the direction of movement of the blocking fingers (26).

10. The longitudinal guide rail according to claim 1, **characterized in that** the master spring (46) engages with the retaining springs (36) in an area of the retaining springs (36) which is allocated to the unlocking hatch (32).

## Claims (Claims for the following Contracting State(s): DE, GB)

1. In a longitudinal guide rail of a motor vehicle seat, which has a top rail (20) and a bottom rail (22) and a device for locking which comprises
a) a bearing casing (24),
b) a number of blocking fingers (26) arranged in the bearing casing (24), which can, independently from each other, engage into a blocking position and which can be jointly released,
c) an unlocking hatch (32) which
- is arranged around a swiveling axis (34) and can be moved between said blocking position and a release position in a swiveling manner at the bearing casing (24),
- comprises an unlocking area (40) and
- comprises for each blocking finger (26) a carrier (38) for a form-locking movement of the respective blocking finger (26) into the release position, and
d) a retaining spring (36) for each blocking finger (26) which each is operatively arranged between the unlocking hatch (32) and the associated blocking finger (26), and a master spring (46) is provided which is arranged between the bearing casing (24) and the unlocking hatch (32), which biases the unlocking hatch (32) into the blocking position against the effect of the individual retaining springs (36), whereby the spring tension of the master spring (46) is, in the case of 3 blocking fingers (26), at least 1,5 times larger than the spring tension of an individual retaining spring (36) and in the case of four blocking fingers (26) 2,5 times larger than the spring tension of a retaining spring (36).

2. The longitudinal guide rail according to claim 1, **characterized in that** an effective line of the master spring (46) is further away from the swiveling axis (34) in the topmost indexing position of the unlocking hatch (32) than in the release position of the unlocking hatch (32).

3. The longitudinal guide rail according to claim 1, **characterized in that** the retaining springs (36) are each embodied as leaf type springs or as spring bars, especially as operating lever springs.

4. The longitudinal guide rail according to claim 1, **characterized in that** the retaining springs (36) support themselves on the swiveling axis (34), especially that they are held by it.

5. The longitudinal guide rails according to claim 1, **characterized in that** the retaining springs (36) engage with the associated blocking finger (26) near a terminal area, especially rest on the terminal area.

6. The longitudinal guide rail according to claim 1, **characterized in that** the individual retaining springs (36) are combined to a one piece multiple spring, which has a transverse area, which transverse area supports itself on the unlocking hatch (32).

7. The longitudinal guide rail according to claim 1, **characterized in that** the retaining springs (36) essentially run crosswise to the direction of movement of the blocking fingers (26).

8. The longitudinal guide rail according to claim 1, **characterized in that** the master spring (46) engages with the retaining springs (36) in an area of the retaining springs (36) which is allocated to the unlocking hatch (32).

## Revendications (Revendications pour l'(les) Etat(s) contractant(s) suivant(s): FR)

1. Guidage longitudinal d'un siège de véhicule, qui, d'un côté, présente un rail supérieur (20) et un rail inférieur (22) et qui, de l'autre côté, comprend un dispositif d'arrêt qui
a) présente un boîtier de logement (24),
b) comprend plusieurs doigts d'arrêt (26) qui sont disposés dans ledit boîtier de logement (24), peuvent être enclenchés les uns indépendamment des autres dans une position d'arrêt et peuvent être désenclenchés en commun pour prendre une position de libération,
c) présente un clapet de déverrouillage (32) qui
- est disposé sur ledit boîtier de logement (24) de manière à pouvoir pivoter autour d'un axe de pivotement (34) et, ce faisant, entre une position d'arrêt et une position de libération,
- a une zone de déverrouillage (40), et
- présente pour chaque doigt d'arrêt (26) un entraîneur (38) pour entraîner à engagement positif le doigt respectif d'arrêt (26) dans la position de libération, et
d) présente pour chaque doigt d'arrêt (26) un ressort d'arrêt (36) qui, en terme d'effet, est disposé respectivement entre ledit clapet de déverrouillage (32) et le doigt d'arrêt (26) associé.

2. Guidage longitudinal selon la revendication 1, **caractérisé par** un ressort principal (46) qui est disposé entre ledit boîtier de logement (24) et ledit clapet de déverrouillage (32) et qui précontraint le clapet de déverrouillage (32) dans la position d'arrêt à l'encontre de l'effet des ressorts individuels d'arrêt (36).

3. Guidage longitudinal selon la revendication 2, **caractérisé par le fait que**, dans la position d'arrêt du clapet de déverrouillage (32), la ligne d'effet du ressort principal (46) est plus éloignée de l'axe de pivotement (34) que dans la position de libération du clapet de déverrouillage (32).

4. Guidage longitudinal selon la revendication 1, **caractérisé par le fait que**, dans le cas de trois doigts d'arrêt (26), la force du ressort principal (46) est au moins 1,5 fois plus importante que la force d'un seul ressort d'arrêt (36) et que, dans le cas de quatre doigts d'arrêt (26), elle est 2,5 fois plus importante que la force d'un ressort d'arrêt (36).

5. Guidage longitudinal selon la revendication 1, **caractérisé par le fait que** les ressort d'arrêt (36) sont réalisés chacun en tant que ressorts à lames ou comme barres faisant ressort, en particulier comme ressorts à branches.

6. Guidage longitudinal selon la revendication 1, **caractérisé par le fait que** lesdits ressorts d'arrêt (36) s'appuient sur ledit axe de pivotement (34), en particulier sont maintenus sur celui-ci.

7. Guidage longitudinal selon la revendication 1, **caractérisé par le fait que** les ressorts d'arrêt (36) se prennent à proximité d'une zone terminale des doigts d'arrêt (26) respectivement associés, en particulier prennent appui sur ladite zone terminale.

8. Guidage longitudinal selon la revendication 1, **caractérisé par le fait que** les ressorts individuels d'arrêt (36) sont réunis pour former un ressort multiple d'une seule pièce qui, en particulier, présente une zone transversale laquelle s'appuie sur ledit clapet de déverrouillage (32).

9. Guidage longitudinal selon la revendication 1, **caractérisé par le fait que** lesdits ressorts d'arrêt (36) s'étendent pour l'essentiel transversalement à la direction de mouvement des doigts d'arrêt (26).

10. Guidage longitudinal selon la revendication 1, **caractérisé par le fait que** ledit ressort principal (46) se prend sur les ressorts d'arrêt (36), à savoir dans la zone des ressorts d'arrêt (36) qui est associée au clapet de déverrouillage (32).

## Revendications (Revendications pour l'(les) Etat(s) contractant(s) suivant(s): DE, GB)

1. Guidage longitudinal d'un siège de véhicule, qui, d'un côté, présente un rail supérieur (20) et un rail inférieur (22) et qui, de l'autre côté, comprend un dispositif d'arrêt qui
a) présente un boîtier de logement (24),
b) comprend plusieurs doigts d'arrêt (26) qui sont disposés dans ledit boîtier de logement (24), peuvent être enclenchés les uns indépendamment des autres dans une position d'arrêt et peuvent être désenclenchés en commun pour prendre une position de libération,
c) présente un clapet de déverrouillage (32) qui
- est disposé sur ledit boîtier de logement (24) de manière à pouvoir pivoter autour d'un axe de pivotement (34) et, ce faisant, entre une position d'arrêt et une position de libération,
- a une zone de déverrouillage (40), et
- présente pour chaque doigt d'arrêt (26) un entraîneur (38) pour entraîner à engagement positif le doigt respectif d'arrêt (26) dans la position de libération, et
d) présente pour chaque doigt d'arrêt (26) un ressort d'arrêt (36) qui, en terme d'effet, est respectivement entre ledit clapet de déverrouillage (32) et le doigt d'arrêt (26) associé, un ressort principal (46) est prévu, qui est disposé entre ledit boîtier de logement (24) et ledit clapet de déverrouillage (32) et qui précontraint le clapet de déverrouillage (32) dans la position d'arrêt à l'encontre de l'effet des ressorts disposé individuels d'arrêt (36), et dans le cas de trois doigts d'arrêt (26), la force du ressort principal (46) est au moins 1,5 fois plus importante que la force d'un seul ressort d'arrêt (36) et, dans le cas de quatre doigts d'arrêt (26), elle est 2,5 fois plus importante que la force d'un ressort d'arrêt (36).

2. Guidage longitudinal selon la revendication 1, **caractérisé par le fait que**, dans la position d'arrêt du clapet de déverrouillage (32), la ligne d'effet du ressort principal (46) est plus éloignée de l'axe de pivotement (34) que dans la position de libération du clapet de déverrouillage (32).

3. Guidage longitudinal selon la revendication 1, **caractérisé par le fait que** les ressort d'arrêt (36) sont réalisés chacun en tant que ressorts à lames ou comme barres faisant ressort, en particulier comme ressorts à branches.

4. Guidage longitudinal selon la revendication 1, **caractérisé par le fait que** lesdits ressorts d'arrêt (36) s'appuient sur ledit axe de pivotement (34), en particulier sont maintenus sur celui-ci.

5. Guidage longitudinal selon la revendication 1, **caractérisé par le fait que** les ressorts d'arrêt (36) se prennent à proximité d'une zone terminale des doigts d'arrêt (26) respectivement associés, en particulier prennent appui sur ladite zone terminale.

6. Guidage longitudinal selon la revendication 1, **caractérisé par le fait que** les ressorts individuels d'arrêt (36) sont réunis pour former un ressort multiple d'une seule pièce qui, en particulier, présente une zone transversale laquelle s'appuie sur ledit clapet de déverrouillage (32).

7. Guidage longitudinal selon la revendication 1, **caractérisé par le fait que** lesdits ressorts d'arrêt (36) s'étendent pour l'essentiel transversalement à la direction de mouvement des doigts d 'arrêt (26).

8. Guidage longitudinal selon la revendication 1, **caractérisé par le fait que** ledit ressort principal (46) se prend sur les ressorts d'arrêt (36), à savoir dans la zone des ressorts d 'arrêt (36) qui est associée au clapet de déverrouillage (32).
